# EUROPÄISCHE PATENTANMELDUNG

(11) **EP 1 191 517 A2**
(43) Veröffentlichungstag der Anmeldung: **27.03.2002**
(21) Anmeldenummer: 01000469.5
(22) Anmeldetag: 18.09.2001
(51) Int. Cl.: G10L 15/22

(54) **Dialogsystem**

(30) Priorität: 20.09.2000 DE 10046359
(71) Anmelder: Philips Corporate Intellectual Property GmbH, 52064 Aachen (DE); Koninklijke Philips Electronics N.V., 5621 BA Eindhoven (NL)
(72) Erfinder: Kellner, Andreas, 52064, Aachen (DE); Souvignier, Bernd, 52064, Aachen (DE); Portele, Thomas, Aachen, 52064 (DE); Philips, Petra, Aachen, 52064 (DE)
(74) Vertreter: Volmer, Georg, Dipl.-Ing.

(57) **Zusammenfassung**

Die Erfindung betrifft ein Dialogsystem (1), das eine für einen Benutzer möglichst komfortable und effektive Dialoggestaltung aufweist, mit Verarbeitungseinheiten
- zur automatischen Spracherkennung (3),
- zum Sprachverstehen (4),
- zur Definition von Systemausgaben in Abhängigkeit von aus Benutzereingaben abgeleiteten Informationen (7),
- zum Erzeugen von akustischen und/oder visuellen Systemausgaben (9, 10, 11, 12),
- zur Ableitung von Benutzermodellen, wobei die Benutzermodelle Angaben über den Sprachstil von Benutzereingaben und/oder Angaben über Interaktionen in Dialogen zwischen Benutzern und dem Dialogsystem (1) enthalten und wobei eine Adaption von Inhalt und/oder Form von Systemausgaben in Abhängigkeit von den Benutzermodellen vorgesehen ist.

## Beschreibung

Die Erfindung betrifft ein Dialogsystem mit Verarbeitungseinheiten zur automatischen Spracherkennung, zum Sprachverstehen, zur Definition von Systemausgaben in Abhängigkeit von aus Benutzereingaben abgeleiteten Informationen und zum Erzeugen von akustischen und/oder visuellen Systemausgaben.

Ein solches Dialogsystem ist bspw. aus dem Artikel "The Thoughtful Elephant: Strategies for Spoken Dialogue Systems" von Bernd Souvignier, Andreas Kellner, Bernd Rüber, Hauke Schramm und Frank Seide, IEEE Transactions on Speech and Audio Processing, 1/2000 bekannt. Das beschriebene System wird bspw. als automatisches Bahnauskunftssystem oder als automatisches Telefonauskunftsystem eingesetzt. Das beschriebene Dialogsystem besitzt eine Schnittstelle zum Telefonnetz, über die Spracheingaben eines Benutzers empfangen und als elektrische Signale einer Spracherkennungseinheit zugeführt werden. Die von der Spracherkennungseinheit gelieferten Erkennungsergebnisse werden von einer Sprachverstehenseinheit auf ihren Sinngehalt hin analysiert. In Abhängigkeit vom ermittelten Sinngehalt und in einer Datenbank gespeicherten anwendungsspezifischen Daten generiert eine Dialogkontrolleinheit mit Hilfe eines Text-/Sprache-Umsetzers eine Sprachausgabe, die über die Schnittstelle und das Telefonnetz übertagen wird. In Kapitel VII. "Usability Studies" wird erwähnt, dass unerfahrene Benutzer eher selbsterklärende mit Zusatzinformationen versehene Systemausgaben bevorzugen, erfahrenere Benutzer dagegen einen möglichst kurzen Dialog mit einfachen Systemausgaben vorziehen. Es wird vorgeschlagen, Benutzermodelle einzuführen, die das Dialogmanagement beeinflussen.

Der Erfindung liegt die Aufgabe zugrunde, ein Dialogsystem mit einem für einen Benutzer möglichst komfortablen und effektiven Dialogmanagement zu schaffen.

Die Aufgabe wird durch das Dialogsystem gemäß Patentanspruch 1 und das Verfahren gemäß Patentanspruch 7 gelöst.

Bei dem erfindungsgemäßen Dialogsystem werden die Systemausgaben in Inhalt und Form an den Sprachstil von Benutzereingaben und/oder an das Verhalten eines Benutzers während eines Dialogs mit dem Dialogsystem angepasst. Die Angaben über Sprachstil und Dialoginteraktionen eines Benutzers sind in einem zugehörigen Benutzermodell enthalten, das von den Dialogsystemkomponenten ausgewertet wird. Das Dialogsystem ist somit in der Lage, an den Sprachstil eines Benutzers angepasste Systemausgaben mit einem entsprechenden für den Benutzer als angenehm empfundenen Sprachstil zu generieren. Damit kann die Hemmschwelle bei der Benutzung des Dialogsystems gesenkt werden. Sowohl der Sinngehalt als auch die Syntax von Systemausgaben werden bei dem erfindungsgemäßen Dialogsystem adaptiert, so dass eine Dialoggestaltung ermöglicht wird, bei der ein mit dem Benutzer zu führender Dialog von diesem als angenehm empfunden und außerdem der Dialog mit dem Benutzer möglichst effektiv geführt wird. Auch das Interaktionsverhalten eines Benutzers geht in das zugehörige Benutzermodell ein, so dass insbesondere die während eines Dialogs vom Dialogsystem verwendeten Ausgabemodalitäten in Abhängigkeit von der Benutzung verfügbarer verschiedener Eingabemodalitäten optimal eingesetzt werden (siehe Anspruch 2). In manchen Fällen kann eine reine Sprachausgabe erfolgen, in anderen Fällen eine Ausgabe von Signaltönen und wieder in anderen Fällen eine visuelle Systemausgabe. Insbesondere können verschiedene Ausgabemodalitäten auch kombiniert eingesetzt werden, um eine effektive Kommunikation mit dem Benutzer zu gewährleisten. Es erfolgt eine Konzentration auf diejenigen Ausgabemodalitäten, bei denen der Benutzer die höchsten Erfolgsraten erzielt. Das Dialogsystem kann einem Benutzer unter Berücksichtigung seiner Bedürfnisse und Fähigkeiten optimal helfen, sein Dialogziel zu erreichen.

Die Ausgestaltung gemäß Ansprüchen 3 und 4 ermöglicht die Anpassung der Dialoggestaltung, wenn Benutzereingaben mit unterschiedlicher Zuverlässigkeit erkannt werden. Hierbei können sogenannte Konfidenzmaße verwendet werden. Wird ein Erkennungsergebnis als unzuverlässig erkannt, kann der Benutzer beispielsweise zur Bestätigung des Erkennungsergebnisses aufgefordert werden oder durch geeignete Systemausgaben zur Verwendung anderer Eingabemodalitäten veranlasst werden.

Die Ansprüche 5 und 6 geben Möglichkeiten an, Benutzermodelle zu bestimmen. Die Verwendung von festen Modellen für Benutzerstereotypen hat den Vorteil, dass einem Benutzer schon mit wenigen Dialogdaten ein umfangreiches Benutzermodell zugeordnet werden kann.

Ausführungsbeispiele der Erfindung werden nachfolgend anhand der Zeichnungen näher erläutert. Es zeigen:
- Fig.1: ein Blockschaltbild eines Dialogsystems und
- Fig.2: ein Blockschaltbild zur Benutzermodellverarbeitung im Dialogsystem gemäß Fig.1.

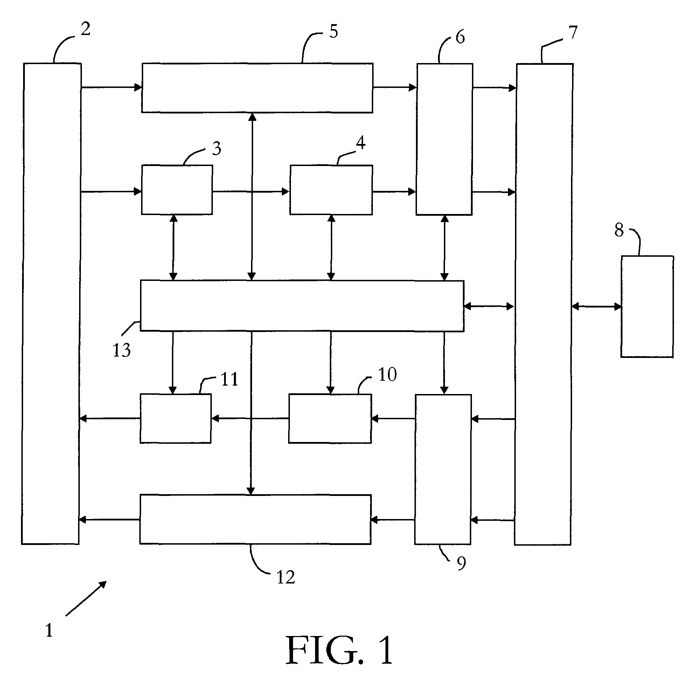

Das in Fig.1 gezeigte Dialogsystem 1 weist eine Schnittstelle 2 auf, über die Benutzereingaben dem Dialogsystem 1 zugeführt werden. Die Benutzereingaben sind vorzugsweise Sprachsignale, jedoch sind auch andere Eingabemodalitäten wie die Eingabe per Computermaus, Touchscreen, Gestik oder Handschrifterkennung möglich. Spracheingaben werden üblichen Spracherkennungsalgorithmen (Block 3) und Algorithmen zum Sprachverstehen (Block 4) unterworfen. Benutzereingaben unter Verwendung anderer Eingabemodalitäten wie die Eingabe per Computermaus werden in einer durch einen Block 5 gekennzeichneten Verarbeitungseinheit erkannt und interpretiert. Ein Block 6 integriert die von den beiden Zweigen (Block 3 und 4 einerseits und Block 5 andererseits) gelieferten Signale und erzeugt daraus ein die relevanten Informationen in den Benutzereingaben repräsentierendes Signal, dass von einer die Dialoggestaltung bestimmenden Dialogkontrolleinheit 7 verarbeitet wird. Diese greift auf eine Datenbank 8 mit anwendungsspezifischen Daten zu und definiert Systemausgaben, um einen Dialog mit dem Benutzer zu führen. Block 9 kennzeichnet die Bestimmung der optimalen Ausgabemodalität bzw. Ausgabemodalitäten für die Systemausgaben für den jeweiligen Benutzer. Die Verarbeitung gemäß Block 9 könnte auch als integraler Bestandteil der Verarbeitung durch die Dialogkontrolleinheit 7 definiert werden. Block 10 kennzeichnet die Bildung ganzer Sätze, die auf der Grundlage der von Block 9 gelieferten Informationen erzeugt werden. Block 11 stellt einen Text-/Sprache-Umsetzer dar, der die von der Einheit 10 gelieferten und als Text vorliegenden Sätze in Sprachsignale umsetzt, die über die Schnittstelle 2 an den Benutzer übertragen werden. Die Generierung von Systemausgaben mittels anderer Ausgabemodalitäten, insbesondere die Generierung von visuellen Systemausgaben wird durch den parallel zu den Blöcken 10 und 11 liegenden Block 12 gekennzeichnet.

Ein Block 13 kennzeichnet eine Benutzermodellverarbeitung mit Benutzermodellen, die in Abhängigkeit von Informationen, die aus den Verarbeitungsprozeduren der Blöcke 3,4,5, 6 und 7 abgeleitet werden, erzeugt werden. In Abhängigkeit von den so ermittelten Benutzermodellen werden die Verarbeitungsprozeduren gemäß der Blöcke 7, 9, 10, 11 und 12 adaptiert.

Bei der Generierung von Benutzermodellen werden insbesondere der Sprachstil und auftretende Interaktionen zwischen Benutzer und Dialogsystem berücksichtigt.

Bei der Bestimmung des Sprachstils einer Benutzereingabe werden bspw. Auswertungen hinsichtlich folgender Merkmale vorgenommen:
- Anzahl von verwendeten Höflichkeitsfloskeln,
- verwendete Anrede (Du oder Sie),
- Sprachebene (Umgangssprache, Hochsprache, Dialekt),
- Informationsdichte (Zahl der als bedeutungstragend erkannten Wörter einer Spracheingabe im Verhältnis zur Gesamtzahl der benutzten Worte),
- Wortschatz und Verwendung von Fremdwörtern,
- Zahl der verschiedenen Wörter in Benutzereingaben,
- Klassifizierung von Wörtern von Spracheingaben nach Seltenheit.

In Abhängigkeit von den ermittelten Sprachstildaten wird der Sprachstil von Sprachausgaben angepasst, d.h. es werden entsprechende Höflichkeitsfloskeln und die gleiche Anrede verwendet, die Sprachebene wird der ermittelten Sprachebene angepasst, in Abhängigkeit von der Informationsdichte in einer Spracheingabe werden mehr oder weniger ausführliche Systemausgaben generiert und das für die Sprachausgaben verwendete Vokabular wird entsprechend ausgewählt.

Bei der Bestimmung von Interaktionsmustern wird insbesondere ermittelt, welche Eingabemodalitäten ein Benutzer verwendet hat und wie das Zusammenspiel der einzelnen Eingabemodalitäten jeweils erfolgte. Insbesondere wird ausgewertet inwieweit ein Benutzer zwischen verschiedenen Eingabemodalitäten wechselt oder auch zur Eingabe einer bestimmten Information mehrere Eingabemodalitäten gleichzeitig verwendet. Als Interaktionsmuster kommt auch in Frage, dass ein Benutzer gleichzeitig mehrere Informationen unter Verwendung einer entsprechenden Anzahl von Eingabemodalitäten eingibt (also bspw. zwei Eingaben mit unterschiedlichem Informationsgehalt gleichzeitig tätigt). In einem Benutzermodell wird ein Interaktionsmuster durch entsprechende a-priori-Wahrscheinlichkeitswerte repräsentiert, die bei der Verarbeitung gemäß Block 6 (multimodale Integration) berücksichtigt werden.

Entsprechend dem von einem Benutzer verwendeten Sprachstil und dem bei einem Dialog mit einem solchen Benutzer auftretenden Interaktionsmuster wird ein Benutzermodell generiert, mit deseen Hilfe eine Adaption von Inhalt und/oder Form von Systemausgaben des Dialogsystems vorgenommen wird. Systemausgaben werden aufgrund dieser Adaption so erzeugt, dass ein mit dem Benutzer zu führender Dialog von diesem als angenehm empfunden und außerdem der Dialog mit dem Benutzer möglichst effektiv geführt wird. Beispielsweise wird festgelegt, inwieweit dem Benutzer Möglichkeiten zur Metakommunikation (z. B. Hilfe-Funktionen/-Assistenten) vom Dialogsystem zur Verfügung gestellt werden. In ein Benutzermodell wird insbesondere Information über Paradigmenwissen (Erfahrenheit in der Benutzung von Dialogsystemen) und Aufgabenwissen (Wissen darüber, welche Art von Benutzereingaben überhaupt erforderlich sind, um eine Auskunft durch das Dialogsystem zu erlangen) einfließen. Weiterhin werden zur Verbesserung der Fehlerrate bei der Erkennung von Benutzereingaben auch die Verarbeitungsprozesse der Blöcke 3,4,5 und 6 adaptiert. Insbesondere werden Wahrscheinlichkeitswerte adaptiert, die für die Spracherkennungs- und Sprachverstehen-Algorithmen eingesetzt werden (z. B. Anpassung an den ermittelten Sprachstil).

In die Adaption eines Benutzermodells kann auch der jeweils erreichte Diskursfortschritt in einem Dialog zwischen Benutzer und Dialogsystem eingehen. Dieser kann dadurch ermittelt werden, dass bestimmt wird, inwiefern sogenannte Slots (Informationseinheiten repräsentierende Variablen, siehe Artikel "The Thoughtful Elephant: Strategies for Spoken Dialogue Systems") durch Eingabe geeigneter Informationen durch den Benutzer mit konkreten Werten gefüllt sind. Der Diskursfortschritt hängt auch davon ab, inwieweit der Inhalt von Slots korrigiert werden musste, z.B. aufgrund von Fehlerkennungen oder weil der Benutzer kein klares Ziel verfolgte. Durch Beobachtung des Diskursfortschritts eines Benutzers kann ermittelt werden, inwieweit dieser mit dem Dialogsystem vertraut ist. Ein Benutzermodell kann darüber hinaus auch Informationen über den Aufruf von Hilfefunktionen oder auch den "Verzweiflungsgrad'' eines Benutzers, der sich in entsprechender Mimik (zu deren Ermittlung müsste eine Kamera und eine entsprechende Bildverarbeitung vorgesehen werden) und Ratlosigkeit/Konfusion bei der Dialogführung äußert, enthalten.

In einer Ausgestaltung des erfindungsgemäßen Dialogsystems ist weiterhin vorgesehen, Schätzwerte für die Zuverlässigkeit von Benutzereingaben zu ermitteln und in die Benutzermodelle aufzunehmen. Hierbei können sogenannte Konfidenzmaße verwendet werden, die für den Bereich der Spracherkennung bspw. in der DE 198 42 405 A1 beschrieben sind. In einem Benutzermodell werden die Schätzwerte für die Zuverlässigkeit von aus Benutzereingaben abgeleiteten Erkennungsergebnissen abgelegt und dem jeweiligen Benutzer zugeordnet. Dialogsystemantworten auf Benutzereingaben werden in Abhängigkeit von den Zuverlässigkeitsschätzwerten generiert. Dabei wird der jeweilige Benutzer zur Verwendung solcher Eingabemodalitäten veranlasst, für die hohe Zuverlässigkeitsschätzwerte bestimmt wurden und/oder davon abgehalten, Eingabemodalitäten mit geringen Zuverlässigkeitsschätzwerten zu verwenden. Stehen beispielsweise drei Eingabemodalitäten zur Verfügung, wird der Benutzer bei der ersten Alternative entweder zur Verwendung derjenigen Eingabemodalität mit dem größten Zuverlässigkeitsschätzwert oder zur Verwendung der beiden Eingabemodalitäten mit den beiden größten Zuverlässigkeitsschätzwerten aufgefordert. Bei der anderen Alternative wird der Benutzer aufgefordert, die Eingabemodalität mit dem kleinsten Zuverlässigkeitsschätzwert oder die beiden Eingabemodalitäten mit den beiden kleinsten Zuverlässigkeitsschätzwerten nicht zu verwenden. Der Benutzer kann direkt ("Bitte benutzen Sie ..." /"Bitte benutzen Sie nicht...") oder auch indirekt (ohne explizite Aufforderung durch geschickte Dialogführung) zur Verwendung bzw. Nichtverwendung der jeweiligen Eingabemodalitäten veranlasst werden.

Wird ein Erkennungsergebnis als unzuverlässig erkannt, kann der Benutzer beispielsweise auch zur Bestätigung des Erkennungsergebnisses aufgefordert werden. Darüber hinaus wird der Grad, mit dem der Benutzer über das momentane Systemwissen informiert wird, entsprechend dem Zuverlässigkeitsgrad der Benutzereingaben angepasst, um dem Benutzer bei falsch erkannten Eingaben die Möglichkeit zur Korrektur zu geben. Außerdem können die Zuverlässigkeitsschätzwerte der verschiedenen Eingabemodalitäten dazu verwendet werden, die Verarbeitung gemäß Block 6 zu adaptieren, bspw. durch Anpassung der a-priori-Wahrscheinlichkeiten.

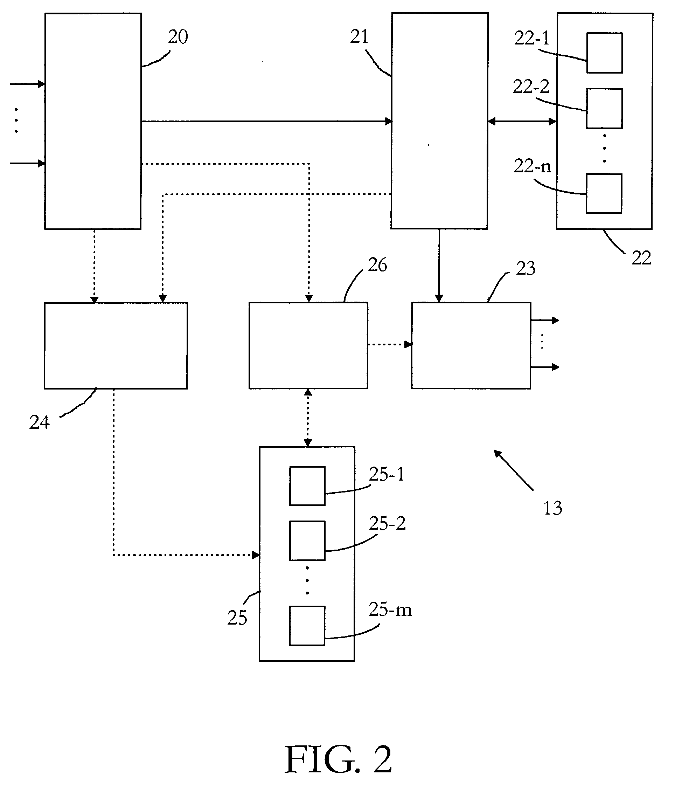

Fig. 2 erläutert die Benutzermodellverarbeitung 13 des Dialogsystems 1. Ein Block 20 kennzeichnet eine Analyse von Benutzereingaben, insbesondere in Bezug auf den verwendeten Sprachstil und/oder auf verwendete Interaktionsmuster, also die Extraktion bestimmter Merkmale, die dem Benutzer zugewiesen werden können. Ein Block 21 kennzeichnet die Zuordnung eines a priori bestimmten festen Modells eines Benutzerstereotyps aus einer Menge a priori definierter fester Benutzerstereotypen 22-1, 22-2 bis 22-n, die durch einen Block 22 zusammengefasst sind. Grundsätzlich kann auch eine Zuordnung mehrerer fester Modelle von Benutzerstereotypen zum aktuellen Benutzer erfolgen, die dann kombiniert werden. Block 23 kennzeichnet die Umsetzung des im Block 21 ermittelten Benutzermodells in eine Adaption des Dialogsystems 1, wobei Inhalt und/oder Form von Systemausgaben in Abhängigkeit von dem ermittelten Benutzermodell angepasst werden; weiterhin werden auch die Verarbeitungsmittel der Blöcke 3 bis 6 angepasst.

Block 24 kennzeichnet eine Berechnung eines aktualisierten Benutzermodells für einen Benutzer. Die Aktualisierung eines Benutzermodells erfolgt dabei fortlaufend auf der Grundlage der durch Block 20 ermittelten Analysedaten. Insbesondere wird ein in Block 21 auf der Grundlage eines oder mehrerer Benutzerstereotypen ermitteltes festes Benutzermodell zugrunde gelegt und angepasst. Block 25 kennzeichnet aktualisierte Benutzermodelle 25-1, 25-2 bis 25-n, die durch einen Block 25 zusammengefasst sind. Mit einem Block 26 ist die Auswahl eines der aktualisierten Benutzermodelle aus Block 25 in Abhängigkeit von den Analysedaten des Blocks 20 dargestellt, wobei mit Hilfe des ausgewählten aktualisierten Benutzermodells wiederum in Block 23 eine Adaption des Dialogsystems 1 durchgeführt wird.

## Patentansprüche

1. Dialogsystem (1) mit Verarbeitungseinheiten
- zur automatischen Spracherkennung (3),
- zum Sprachverstehen (4),
- zur Definition von Systemausgaben in Abhängigkeit von aus Benutzereingaben abgeleiteten Informationen (7),
- zum Erzeugen von akustischen und/oder visuellen Systemausgaben (9,10,11,12),
- zur Ableitung von Benutzermodellen (22, 25), wobei die Benutzermodelle (22, 25) Angaben über den Sprachstil von Benutzereingaben und/oder Angaben über Interaktionen in Dialogen zwischen Benutzern und dem Dialogsystem (1) enthalten und wobei eine Adaption von Inhalt und/oder Form von Systemausgaben in Abhängigkeit von den Benutzermodellen (22,25) vorgesehen ist.

2. Dialogsystem nach Anspruch 1,
**dadurch gekennzeichnet,**
**dass** neben der Eingabemodalität, Benutzereingaben mittels Sprache zu tätigen, mindestens eine weitere Eingabemodalität vorgesehen ist und
**dass** die Benutzermodelle (22,25) Angaben über die jeweilige Verwendung der verschiedenen Eingabemodalitäten durch die Benutzer enthalten.

3. Dialogsystem nach Anspruch 1 oder 2,
**dadurch gekennzeichnet,**
**dass** die Benutzermodelle (22,25) Schätzwerte für die Zuverlässigkeit von aus Benutzereingaben abgeleiteten Erkennungsergebnissen enthalten.

4. Dialogsystem nach Anspruch 3,
**dadurch gekennzeichnet,**
**dass** in Abhängigkeit von den Schätzwerten eine Erzeugung von Systemantworten vorgesehen ist, die den jeweiligen Benutzer zur Verwendung solcher Eingabemodalitäten veranlassen, für die hohe Zuverlässigkeitsschätzwerte bestimmt wurden und/oder die den jeweiligen Benutzer von der Verwendung von Eingabemodalitäten, für die geringe Zuverlässigkeitsschätzwerte bestimmt wurden, abhalten.

5. Dialogsystem nach einem der Ansprüche 1 bis 4,
**dadurch gekennzeichnet,**
**dass** feste Modelle von Benutzerstereotypen (22) zur Bildung der Benutzermodelle verwendet werden.

6. Dialogsystem nach einem der Ansprüche 1 bis 5,
**dadurch gekennzeichnet,**
**dass** eine Verwendung von fortlaufend auf der Grundlage von Eingaben des jeweiligen Benutzers aktualisierten Benutzermodellen (25) vorgesehen ist.

7. Verfahren zum Betreiben eines Dialogsystems, bei dem Verarbeitungseinheiten
- zur automatischen Spracherkennung (3),
- zum Sprachverstehen (4),
- zur Definition von Systemausgaben in Abhängigkeit von aus Benutzereingaben abgeleiteten Informationen (7),
- zum Erzeugen von akustischen und/oder visuellen Systemausgaben (9,10,11,12) und
- zur Ableitung von Benutzermodellen (13)
eingesetzt werden, wobei die Benutzermodelle (22,25) Angaben über den Sprachstil von Benutzereingaben und/oder Angaben über Interaktionen in Dialogen zwischen Benutzern und dem Dialogsystem (1) enthalten und wobei eine Adaption von Inhalt und/oder Form von Systemausgaben in Abhängigkeit von den Benutzermodellen (22,25) vorgesehen ist.
